**Europäisches Patentamt**

(19) **European Patent Office**

**Office européen des brevets**

(11) Veröffentlichungsnummer: **0 151 903**

**B1**

(12) # EUROPÄISCHE PATENTSCHRIFT

(45) Veröffentlichungstag der Patentschrift:
03.02.88

(51) Int. Cl.⁴: **G 01 B 7/34**

(21) Anmeldenummer: **84810604.3**

(22) Anmeldetag: **10.12.84**

(54) Taster für ein Zahnflankenprofilmessgerät zur Ermittlung der Zahnflankenoberflächenrauheit.

(30) Priorität: **21.12.83 CH 6805/83**

(43) Veröffentlichungstag der Anmeldung:
**21.08.85 Patentblatt 85/34**

(45) Bekanntmachung des Hinweises auf die Patenterteilung:
**03.02.88 Patentblatt 88/5**

(84) Benannte Vertragsstaaten:
**AT FR GB NL SE**

(56) Entgegenhaltungen:
**DE-A-2 654 421**
**DE-A-3 002 185**

(73) Patentinhaber: **Maag- Zahnräder und -Maschinen Aktiengesellschaft, Hardstrasse 219, CH- 8023 Zürich (CH)**

(72) Erfinder: **Berchtold, Nikolaus, Schrärenmosstrasse 7, CH- 8052 Zürich (CH)**
Erfinder: **Ruffner, Heinz, Zelglistrasse 11, CH- 8135 Langnau a.A. (CH)**

(74) Vertreter: **Travnicek, Richard, Maag Zahnräder & -Maschinen AG PATENTABTEILUNG Neugasse 6, CH- 8005 Zürich (CH)**

EP 0 151 903 B1

## Beschreibung

Die Erfindung betrifft einen Taster für ein Zahnflankenprofilmeßgerät zur Ermittlung der Zahnflankenoberflächenrauheit, mit einem in einem Gehäuse drehbar gelagerten Tastarm, der an einem Ende eine Tastspitze zur Abtastung der Zahnflankenoberfläche trägt, mit einem Meßsystem, das der Tastspitzenauslenkung entsprechende Signale erzeugt und an eine Auswerteschaltung abgibt, und mit einer am Tastarm angreifenden Vorrichtung zum Einstellen der Tastspitzenauflagekraft.

Es ist bekannt (MAAG-Prospekt A-62-D3.81 "Die neue Zahnrad-Meßmaschine PH-40", S. 5 und 17), solche Oberflächentaster bei einem Zahnflankenprofilmeßgerät in die Tasteraufnahme eines Tasterschlittens einzuspannen, die sonst einen Taster zur Prüfung der Evolventenform einer Zahnflanke aufnimmt. Zum Messen der Oberflächenrauheit wird die Tastspitze (üblicherweise eine Diamantspitze) des Oberflächentasters an eine Zahnflanke angelegt. Die Tastspitze tastet die Flankenoberfläche ab. Die durch die Rauheit verursachten Auslenkungen der Tastspitze werden vom Meßsystem erfaßt, das über die Auswerteschaltung üblicherweise mit einer Anzeigeeinrichtung verbunden ist. Bei diesem bekannten Oberflächentaster wird ein piezoelektrisches Meßsystem verwendet, in welchem ein Keramikstab durch mechanische Verformung aufgrund der Tastspitzenauslenkung ein Signal in Form einer Piezospannung erzeugt. Da die erzeugte Piezospannung von der Verformungsgeschwindigkeit des Keramikstabes abhängig ist, haben solche piezoelektrischen Systeme den Nachteil, daß ohne besondere aufwendige Maßnahmen in der Auswerteschaltung keine langsamen Meßbewegungen aufgenommen werden können.

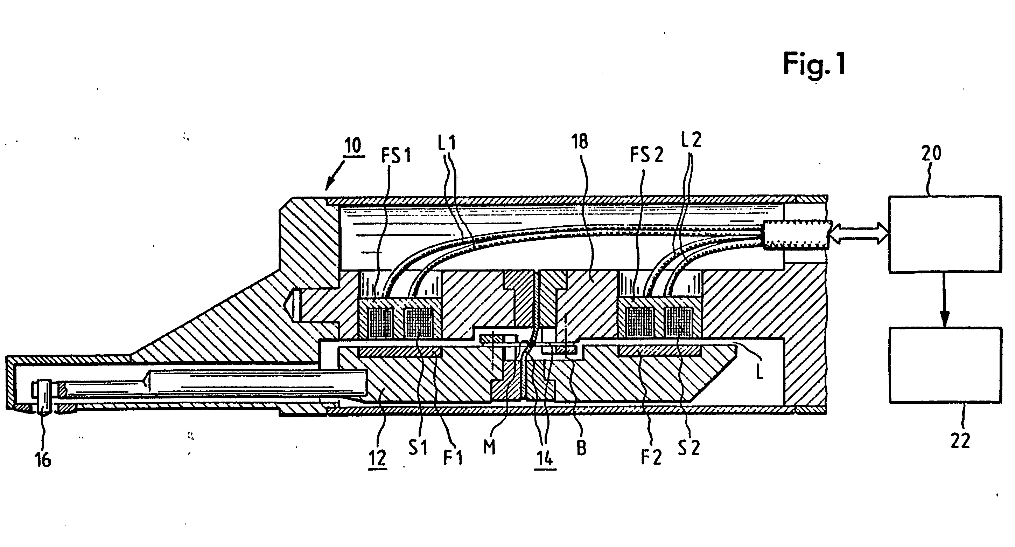

Es sind weiter bereits Oberflächentaster bekannt, bei denen statt des piezoelektrischen Meßsystems ein induktives Trägerfrequenzsystem verwendet wird. Der Aufbau eines solchen bekannten Oberflächentasters ist in Fig. 1 gezeigt, auf die nun Bezug genommen wird. In einem insgesamt mit 10 bezeichneten Gehäuse ist ein insgesamt mit 12 bezeichneter Tastarm mit Hilfe eines Kreuzfedergelenks 14 gelagert, so daß er um einen Drehpunkt M in der Schnittebene der Darstellung in Fig. 1 drehbar ist. Am in Fig. 1 linken Ende trägt der Tastarm 12 eine Tastspitze 16 zur Abtastung der Flankenoberfläche eines nicht dargestellten Zahnrades. In einem in dem Gehäuse 10 befestigten Tragkörper 18 sind zwei Spulen S1 und S2 mit Ferritschalenkernen FS1 bzw. FS2 fest angebracht, gegenüber denen jeweils ein Ferritkern F1 bzw. F2 am Tastarm 12 fest angebracht ist. Die Spulen S1 und S2 sind über Leitungen L1 bzw. L2 mit einer nur schematisch angedeuteten Auswerteschaltung 20 verbunden, an die eine Anzeigeeinrichtung 22 angeschlossen ist. Der Oberflächentaster ist in Fig. 1 übertrieben groß dargestellt, denn in Wirklichkeit haben die Spulen nur einen Außendurchmesser von etwa 3 mm.

Der innere Aufbau der Auswerteschaltung 20 ist nicht im einzelnen dargestellt, da solche Trägerfrequenzsysteme allgemein bekannt sind. Die Auswerteschaltung für ein Trägerfrequenzsystem der in Fig. 1 gezeigten Art enthält einen Trägerfrequenzoszillator, der eine Trägerfrequenzspannung erzeugt, die an die Spulen S1, S2 angelegt wird. Die beiden Spulen liegen in der Diagonalen eines in der Auswerteschaltung angeordneten Trägerfrequenzbrückensystems. Bei der Auslenkung des Tastarms 12 wird der Luftspalt L zwischen einer Spule und ihrem Ferritkern größer und zwischen der anderen Spule und ihrem Ferritkern kleiner, wodurch die Brücke verstimmt und ein entsprechendes Signal erzeugt wird. Bei der Verwendung eines induktiven Tastsystems der in Fig. 1 dargestellten Art ergibt sich das Problem, daß sehr leicht die obere Grenzfrequenz erreicht wird, wenn mit vertretbarem Schaltungsaufwand ein einigermaßen genaues System hergestellt werden soll. Bei dem bekannten Taster werden die Spulen mit einer Trägerfrequenz von 20 kHz betrieben, was theoretisch eine Signalfrequenz von 2 kHz erzielbar macht, d. h. einen Frequenzgang von 0 bis 2 kHz.

Ein weiteres Problem bei dem vorstehend beschriebenen Oberflächentaster ergibt sich aus der Art der Einstellung der Auflagekraft der Tastspitze. Damit die Tastspitze immer eine definierte Auflagekraft hat, muß sie gegen die zu messende Flankenoberfläche vorgespannt werden. Zu diesem Zweck werden bei dem bekannten Taster Befestigungsschrauben B der beiden horizontalen Federblätter des Kreuzfedergelenks 14 gelöst, der Tastarm wird nach vorn in Richtung der Tastspitze 16 verschoben und dabei wird das vertikale Federblatt des Kreuzfedergelenks 14 nach vorn gebogen, so daß es nach dem Wiederanziehen der Befestigungsschrauben B in dieser Stellung bleibt und eine Vorspannkraft auf den Tastarm 12 und somit auf die Tastspitze 16 ausübt. Einer der großen Nachteile dieser Art der Einstellung der Vorspann- oder Auflagekraft besteht darin, daß diese Kraft nicht während des Einstellens, sondern erst nach erfolgter Einstellung gemessen werden kann. Die richtige Einstellung der Kraft kann somit nur durch Probieren gefunden werden, was einen arbeitsaufwendigen Prozeß darstellt. Erschwert wird das Problem zusätzlich noch dadurch, daß die Größe des Luftspalts L möglichst einen definierten und sehr kleinen Wert haben sollte, damit sich eine möglichst große Aussteuerung ergibt, was bei dem bekannten Taster aber nur theoretisch möglich ist. Ein üblicher Wert für die Auflagekraft beträgt $15{,}7 \cdot 10^{-3} N$ (1,6 p). Zum Erzielen dieser Auflagekraft muß in dem Kreuzfedergelenk eine Federvorspannung erzeugt werden, die wenigstens 30- bis 50-mal so groß ist. Die dafür erforderliche beträchtliche Verspannung des Kreuzfedergelenks führt zu einer beträchtlichen Verringerung der Beweglichkeit des Tastarms, was sich aus folgendem Grund sehr nachteilig auswirken kann.

Bei dem weiter oben erwähnten bekannten Oberflächentaster, der statt des Spulensystems ein piezoelektrisches System enthält, ansonsten aber im wesentlichen denselben mechanischen Aufbau wie der induktive Taster hat, wird zum motorischen Hin- und Herbewegen der an der Zahnflanke anliegenden Tastspitze ein besonderer Vorschubapparat verwendet, der einen Kleinmotor und auswechselbare Glockenkurven enthält, wobei die Vorschubgeschwindigkeit so gewählt wird, daß die Beweglichkeit des Tastarms ausreicht. Würde ein solcher Taster aber ohne Vorschubapparat in die oben erwähnte Tasteraufnahme eingesetzt und der gleiche Meßantrieb benutzt, der in dem Zahnflankenprofilmeßgerät bereits für die Profilprüfung vorhanden ist, so ergäbe sich das Problem, daß die Beweglichkeit des Tastarms nicht mehr ausreichen würde. Wenn nämlich die Tastspitze die Zahnflanke zwischen dem Zahnfuß und dem Zahnkopf abtastet, ergibt sich eine Geschwindigkeitsänderung im Verhältnis von etwa 1 : 4, obgleich sich das Zahnrad während der Messung mit konstanter Geschwindigkeit dreht. Zusätzlich kann die Meßgeschwindigkeit durch schnelleres Drehen des Zahnrades während der Messung auch noch im Verhältnis von 1 : 20 verändert werden. Das stellt bezüglich des Frequenzganges und somit auch bezüglich der Beweglichkeit hohe Anforderungen an den Oberflächentaster, die die bekannten Oberflächentaster ohne den Vorschubapparat überhaupt nicht erfüllen könnten.

Aufgabe der Erfindung ist es, einen Taster für ein Zahnflankenprofilmeßgerät zur Ermittlung der Zahnflankenoberflächenrauheit so auszubilden, daß die Auflagekrafteinstellung bereits während des Einstellvorganges kontrollierbar ist und daß sich ein einfacherer mechanischer Aufbau und ein wesentlich geringerer Schaltungsaufwand ergeben.

Diese Aufgabe ist durch die im Kennzeichen des Patentanspruchs 1 angegebenen Merkmale gelöst.

Anstelle des Spulensystems wird bei dem Taster nach der Erfindung ein in einem statischen Magnetfeld angeordneter handelsüblicher Hallsensor benutzt, wobei durch die Auslenkung der Tastspitze eine Relativbewegung zwischen dem Hallsensor und dem Erzeuger des statischen Magnetfeldes hervorgerufen wird, die das Meßsignal ergibt. Durch die Verwendung des Hallsensors statt des bislang üblichen induktiven oder piezoelektrischen Systems kann einerseits der Frequenzgang bedeutend erweitert und ohne Probleme von 0 bis 10 kHz als Aussteuerbereich zur Verfügung gestellt und andererseits der elektronische Aufwand zur Realisierung der Auswerteschaltung beträchtlich verringert werden, denn im einfachsten Fall braucht als Auswerteschaltung dem Hallsensor bekanntlich im wesentlichen lediglich ein Operationsverstärker nachgeschaltet zu werden (vgl. "Hall Effect Transducers, How to apply them as sensors", MICRO SWITCH, a Honeywell Division, Freeport, Illinois 61032, USA, 1982, S. 87, Fig. 4-37, wobei dieses Buch auch einige Arten von Hallsensoren beschreibt, die bei der Erfindung verwendbar sind). Der Taster nach der Erfindung enthält vorzugsweise zwar auch ein Kreuzfedergelenk zur drehbaren Lagerung des Tastarms, dieses braucht jedoch für die Erzeugung der Auflagekraft nicht mehr vorgespannt zu werden, da zur Erzeugung der Auflagekraft eine gesonderte Vorrichtung mit Abstand vom Drehpunkt des Tastarms vorgesehen ist. Die Beweglichkeit des Tastarms wird dadurch wesentlich verbessert, und die Auflagekraft kann bereits während des Einstellvorganges gemessen werden. Nicht nur dadurch wird eine einfachere Konstruktion des Tasters erzielt, sondern auch durch die Verwendung des Hallsensors, da handelsübliche Hallsensoren bereits mit integriertem Verstärker und entsprechender Spannungsstabilisierung versehen sind und die Verwendung eines in der Herstellung und in der Justierung sehr aufwendigen Spulensystems vermieden wird.

In der Ausgestaltung der Erfindung nach den Ansprüchen 2 und 3 besteht der Erzeuger des statischen Magnetfeldes aus zwei Dauermagneten, zwischen denen der Hallsensor im Gehäuse fest angebracht ist. In Abhängigkeit davon, ob sich gleichnamige oder ungleichnamige Pole dieser Dauermagnete gegenüberliegen, kann die Vorrichtung zum Einstellen der Tastspitzenauflagekraft eine Zug- oder Druckfeder sein, die zur Kompensation der durch die Dauermagnete auf den Tastarm ausgeübten Kraft auf der einen oder anderen Seite des Drehpunktes des Tastarms zwischen letzterem und dem Tragkörper angeordnet wird und deren Federkraft einstellbar ist.

In der Ausgestaltung der Erfindung nach Anspruch 4 ergibt sich eine definierte Aussteuerung des Hallsensors in der Nähe des Aussteuerbereichsendes, die dann durch die minimale Bewegung desjenigen Dauermagneten, der am Tastarm befestigt ist, verändert wird, so daß insgesamt ein sehr großes Ausgangssignal erzielt wird.

In der Ausgestaltung der Erfindung nach Anspruch 5 besteht die Vorrichtung zum Einstellen der Tastspitzenauflagekraft aber aus zwei Dauermagneten. Der zwischen diesen vorhandene Luftspalt wird so eingestellt, daß durch die durch diese Dauermagnete erzeugte Kraft die durch den Erzeuger des statischen Magnetfeldes erzeugte Kraft kompensiert wird. Durch eine Überkompensation dieser Kraft durch entsprechendes Einstellen des Luftspalts zwischen den Dauermagneten läßt sich eine wählbare Auflagekraft der Tastspitze auf einfache Weise einstellen. In dieser Ausgestaltung der Erfindung wird die Auflagekraft quasi durch die Magnetfelder erzeugt, wodurch jede mechanische Trägheit ausgeschaltet und eine besonders große Beweglichkeit des Tasters ermöglicht wird, dessen Beweglichkeit ohnehin größer ist als bei den bekannten Oberflächentastern, da das Kreuzfedergelenk nicht mehr zur Erzeugung der Auflagekraft vorgespannt werden muß.

In der Ausgestaltung der Erfindung nach Anspruch 6 liegen sich jeweils gleichnamige Pole der Dauermagnete des Erzeugers des statischen Meßmagnetfeldes und der Dauermagnete der Vorrichtung zum Einstellen der Tastspitzenauflagekraft gegenüber, wodurch der Hallsensor besonders gut definiert aussteuerbar ist.

Ein Ausführungsbeispiel der Erfindung wird im folgenden unter Bezugnahme auf die Zeichnungen näher beschrieben. Es zeigt

Fig. 1 eine Längsschnittansicht eines bekannten Tasters, wobei eine zugehörige Auswerteschaltung und eine Anzeigeeinrichtung lediglich schematisch angedeutet sind, und

Fig. 2 in gleicher Darstellung wie in Fig. 1 den Taster nach der Erfindung.

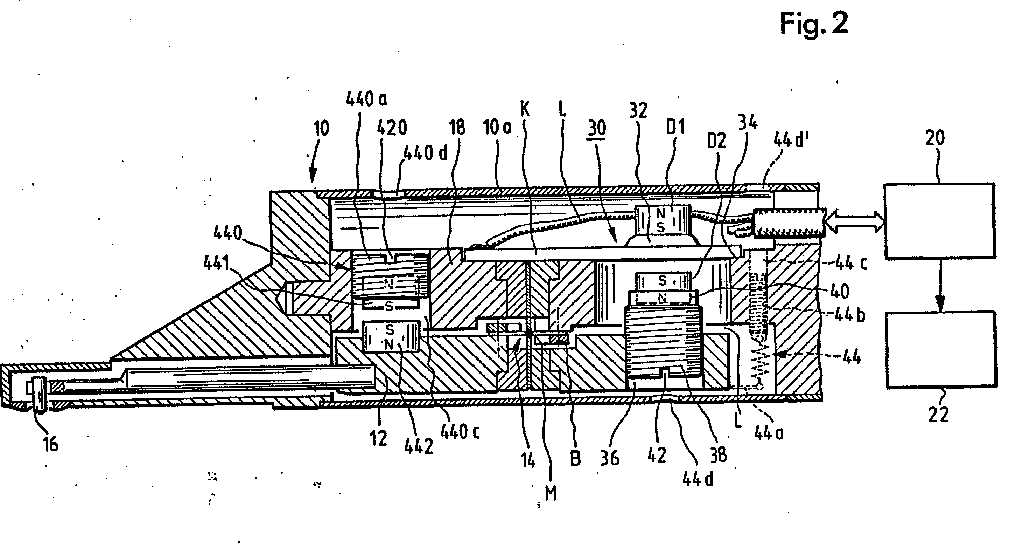

Der Taster nach Fig. 2 unterscheidet sich von dem bekannten Taster nach Fig. 1 wie erwähnt, hauptsächlich in der Ausbildung des Meßsystems, der Auswerteschaltung 20 und der Vorrichtung zum Einstellen der Tastspitzenauflagekraft. Gleiche Teile wie in Fig. 1 tragen gleiche Bezugszeichen.

Gemäß Fig. 2 besteht das Meßsystem aus einem insgesamt mit der Bezugszahl 30 bezeichneten Hallsensor, aus zwei diametral auf entgegengesetzten Seiten des Hallsensors angeordneten Dauermagneten D1 und D2, die ein statisches Meßmagnetfeld erzeugen, und aus der Auswerteschaltung 20, die bei dem hier beschriebenen Taster einfach aus einem einfachen Operationsverstärker bestehen kann, wie eingangs erwähnt, und deshalb nicht näher beschrieben wird.

Der Hallgenerator 30 ist ein handelsübliches Bauelement, d.h. eine auf einem Keramikplättchen K integrierte Schaltung, die durch eine Messingkappe 32 abgedeckt ist und den eigentlichen Hallgenerator, einen Spannungsregler und einen Verstärker enthält. Die auf dem Keramikplättchen K angeordnete elektrische Schaltung ist über Leitungen L mit der Auswerteschaltung 20 verbunden. Der obere Dauermagnet D1 ist direkt auf der Messingkappe befestigt, beispielsweise durch Kleben. Das Keramikplättchen K ist über den Tragkörper 18 am Gehäuse 10 befestigt, z. B. ebenfalls durch Kleben. Auf der von dem Dauermagnet D1 abgewandten Seite des Keramikplättchens hat der Tragkörper 18 eine Aussparung 34. Der dieser Aussparung gegenüberliegende Teil des Tastarms 12 ist mit einer Gewindebohrung 36 versehen, in die ein Magnethalter 38 eingeschraubt ist, welcher auf seiner dem Keramikplättchen zugewandten Stirnseite ein Sackloch 40 aufweist, in das der Dauermagnet D2 eingeklebt ist. Auf der entgegengesetzten Stirnseite hat der Magnethalter 38 einen Schlitz 42, in den die Schneide eines Schraubendrehers über eine darunter vorgesehene Gehäuseöffnung 44d einführbar ist, so daß der gegenseitige Abstand der Dauermagnete D1 und D2 leicht eingestellt werden kann. Die Dauermagnete D1, D2 sind im hier beschriebenen Ausführungsbeispiel so angeordnet, daß sich gleichnamige Pole gegenüberliegen. Die Dauermagnete D1, D2 erzeugen also nicht nur das statische Meßmagnetfeld, das ein der Auslenkung der Tastspitze 16 entsprechendes Signal in dem Hallsensor 30 erzeugt, wenn sich bei der Auslenkung der Tastspitze der Dauermagnet D2 dem Hallsensor nähert oder von diesem entfernt, sondern auch noch eine Abstoßungskraft, die bestrebt ist, den Tastarm 12 im Uhrzeigersinn zu drehen, weshalb sie kompensiert werden muß. Erfindungsgemäß wird diese Kraft nicht nur kompensiert, sondern überkompensiert, und zwar mit Hilfe einer Vorrichtung zum Einstellen der Tastspitzenauflagekraft, so daß letztere fein dosiert eingestellt werden kann.

Eine dafür geeignete Vorrichtung zum Einstellen der Tastspitzenauflagekraft wäre im einfachsten Fall eine mechanische Federanordnung 44, die in Fig. 2 lediglich schematisch angedeutet ist. In dem beschriebenen Beispiel, in welchem sich gleichnamige Pole der Dauermagnete D1, D2 gegenüberliegen, bestünde die Federanordnung 44 aus einer Zugfeder, die am einen Ende an einem mit dem Tastarm 12 verbundenen Arm 44a befestigt und am anderen Ende in das untere Ende einer Einstellschraube 44b drehbeweglich eingesetzt sein könnte, so daß durch Verdrehen der Einstellschraube 44b in ihrer zugehörigen Gewindebohrung 44c die Kraft der Feder mittels eines durch eine Öffnung 44d eingeführten Schraubendrehers leicht eingestellt werden könnte. Bei entgegengesetzter Polung der Dauermagnete D1, D2 würde eine Druckfeder verwendet werden. Die Feder könnte auf entsprechende Weise auch auf der anderen Seite des Drehpunktes M des Tastarms angeordnet werden, wobei dann die Zugfeder durch eine Druckfeder ersetzt würde, und umgekehrt. Die Federanordnung 44 ist aber lediglich ein Beispiel, das eine mechanische Vorrichtung zum Einstellen der Tastspitzenauflagekraft veranschaulichen soll. Bevorzugt wird nämlich für diesen Zweck eine magnetische Vorrichtung, die in Fig. 2 insgesamt mit 440 bezeichnet ist und im folgenden beschrieben wird.

Die magnetische Vorrichtung 440 zum Einstellen der Tastspitzenauflagekraft enthält zwei Dauermagnete 441, 442, die aus dem gleichen Material wie die Dauermagnete D1, D2 bestehen können. Der obere Dauermagnet 441 ist in einen topfförmigen und mit Außengewinde versehenen Magnethalter 440a eingeklebt, welcher in eine Gewindebohrung 440c eingeschraubt ist. Der untere Dauermagnet 442 ist in ein Sackloch eingeklebt, das gegenüber der Gewindebohrung 440c in dem Tastarm 12 vorgesehen ist. Die Dauermagnete 441, 442 erzeugen in dem dargestellten Beispiel, in welchem sich gleichnamige Pole gegenüberliegen, eine Abstoßungskraft, die bestrebt ist, den Tastarm 12 im Gegenuhrzeigersinn zu drehen. Die Größe dieser Kraft wird durch Einstellen des Abstands zwischen den Dauermagneten 441, 442 eingestellt. Zu diesem Zweck ist der Magnethalter 440a an seiner oberen Seite mit einem Schlitz 420 versehen, in den die Schneide eines Schraubendrehers einführbar ist, welcher durch eine im Gehäuse vorgesehene Öffnung 440d eingeführt werden kann. Statt der hier beschriebenen Einstellmöglichkeiten des Abstands zwischen den Dauermagneten D1, D2 bzw. 441, 442 mittels entsprechender Feingewinde kann auch irgendeine andere Einstellvorrichtung verwendet werden, die geeignet ist, einen der Dauermagnete jedes Dauermagnetpaares in einstellbarer, definierter Lage bezüglich des anderen Dauermagnets festzuhalten.

Die magnetische Vorrichtung 440 wird durch Verdrehen des Magnethalters 440a so eingestellt, daß sie auf den Tastarm 12 eine Kraft ausübt, die etwas größer ist als die Kraft, die zum Kompensieren der durch die Dauermagnete D1, D2 erzeugten Kraft erforderlich ist, wobei der Kraftüberschuß die Auflagekraft ergibt, mit der die Tastspitze 16 gegen eine Zahnflanke gedrückt wird. Die gewünschte Auflagekraft, die eingestellt werden soll, kann während des Einstellvorganges genau kontrolliert und gemessen werden, beispielsweise mit einer üblichen Vorrichtung wie sie bei einem Plattenspieler zum Messen der Tonarmauflagekraft verwendet wird.

Da bei dem Taster nach Fig. 2 die Auflagekraft außerhalb des Drehpunkts M mittels der Federanordnung 44 oder der magnetischen Vorrichtung 440 eingestellt wird, erübrigt sich die nachteilige Verspannung des Kreuzfedergelenks im Drehpunkt M was in Fig. 2 im Vergleich zu der Darstellung in Fig. 1 ohne weiteres daran zu erkennen ist, daß das vertikale Federblatt des Kreuzfedergelenks 14 im Bereich des Drehpunkts M keinen Knick aufweist. Der Taster nach Fig. 2 hat eine wesentlich geringere mechanische Trägheit als der Taster nach Fig. 1 und somit die größere Beweglichkeit, weil die Auflagekraft lediglich durch Magnetfelder statt durch Verspannen des Kreuzfedergelenks 14 erzeugt wird.

Ein Teil 10a des Gehäuses 10 ist als Stahlzylinder ausgebildet, der zur Abschirmung dient, um Störeinflüsse von aussen zu verhindern. Durch die Befestigung des Dauermagneten D1 direkt an dem Hallsensor 30 wird bereits eine definierte Aussteuerung des Hallsensors in der Nähe des Aussteuerbereichsendes erzielt. Diese Aussteuerung wird dann durch die minimale Bewegung des zweiten Dauermagneten D2 bei der durch Zahnflankenoberflächenrauheit hervorgerufenen Auslenkung der Tastspitze 16 verändert, so daß insgesamt ein großes Signal erzielt wird. Der Tragkörper 18 beeinflußt die Magnetfelder nicht, da er zweckmäßig aus Aluminium besteht.

## Patentansprüche

1. Taster für ein Zahnflankenprofilmeßgerät zur Ermittlung der Zahnflankenoberflächenrauheit mit einem in einem Gehäuse (10) drehbar gelagerten Tastarm (12), der an einem Ende eine Tastspitze (16) zur Abtastung der Zahnflankenoberfläche trägt, mit einem Meßsystem, das der Tastspitzenauslenkung entsprechende Signale erzeugt und diese an eine Auswerteschaltung (20) abgibt, und mit einer am Tastarm angreifenden Vorrichtung (44; 440) zum Einstellen der Tastspitzenauflagekraft, dadurch gekennzeichnet, daß das Meßsystem einen Hallsensor (30) und einen Erzeuger (D2) eines statischen Magnetfeldes aufweist, die relativ zueinander bewegbar angeordnet und am Gehäuse (10) bzw. am Tastarm (12) befestigt sind, und daß die Vorrichtung (44; 440) zum Einstellen der Tastspitzenauflagekraft mit Abstand vom Drehpunkt (M) des Tastarms (12) angeordnet ist.

2. Taster nach Anspruch 1, dadurch gekennzeichnet, daß der Erzeuger eines statischen Magnetfeldes aus wenigstens einem Dauermagnet (D2) besteht, der an dem Tastarm (12) befestigt ist und dessen Abstand zum Hallsensor bei vorgegebener Stellung des Tastarms einstellbar ist.

3. Taster nach Anspruch 2, dadurch gekennzeichnet, daß der Erzeuger eines statischen Magnetfeldes einen weiteren Dauermagnet (D1) aufweist, der auf der vom Tastarm (12) abgewandten Seite des Hallsensors (30) im Gehäuse (10) fest angebracht ist.

4. Taster nach Anspruch 3, dadurch gekennzeichnet, daß der weitere Dauermagnet direkt auf dem Hallsensor (30) befestigt ist.

5. Taster nach einem der Ansprüche 1 bis 4, dadurch gekennzeichnet, daß die Vorrichtung zum Einstellen der Tastspitzenauflagekraft zwei Dauermagnete (441, 442) aufweist, von denen einer mit dem Gehäuse (10) und der andere mit dem Tastarm (12) verbunden ist und deren gegenseitiger Abstand bei vorgegebener Stellung des Tastarms einstellbar ist.

6. Taster nach Anspruch 5, dadurch gekennzeichnet, daß die beiden Dauermagnete (D1, D2) des Erzeugers eines statischen Magnetfeldes und die beiden Dauermagnete (441, 442) der Vorrichtung zum Einstellen der Tastspitzenauflagekraft so angeordnet sind, daß sich jeweils gleichnamige Pole gegenüberliegen.

## Claims

1. Stylus for a tooth flank profile measuring instrument for determining the tooth flank surface roughness, with a stylus arm (12) which is rotatively mounted in a housing (10) and bears at one end a stylus tip (16) for scanning the tooth flank surface, with a measuring system which produces signals corresponding to the stylus tip deflection and transmits these signals to an analysing circuit (20), and with a device (44; 440) acting on the stylus arm and intended for adjusting the bearing force of the stylus tip, characterized in that the measuring system has a Hall sensor (30) and a generator (D2) of a statimagnetic field which are arranged in such a way that they are moveable relative to one another and are fixed on the housing (10) or on the stylus arm (12), and that the device (44; 440) for adjusting the bearing force of the stylus tip, is arranged at a distance from the pivoting point (M) of the stylus arm (12).

2. Stylus according to Claim 1, characterized in that the generator of a static magnetic field consists of at least one permanent magnet (D2) which is fixed on the stylus arm (12) and its distance from the Hall sensor is adjustable at a given position of the stylus arm.

3. Stylus according to Claim 2, characterized in that the generator of a static magnetic field has a further permanent magnet (D1) which is firmly attached in the housing (10) on the side of the Hall sensor (30) remote from the stylus arm (12).

4. Stylus according to Claim 3, characterized in that the further permanent magnet is fixed directly on the Hall sensor (30).

5. Stylus according to one of Claims 1-4, characterized in that the device for adjusting the bearing force of the stylus tip has two permanent magnets (441, 442), one of which is connected to the housing (10) and the other is connected to the stylus arm (12) and their mutual distance apart is adjustable at a given position of the stylus arm.

6. Stylus according to Claim 5, characterized in that the two permanent magnets (D1, D2) of the generator of a static magnetic field and the two permanent magnets (441, 442) of the device for adjusting the bearing force of the stylus tip are arranged in such a way that like poles in each case face one another.

## Revendications

1. Palpeur pour un appareil de mesure du profil des flancs de dents pour la détermination de la rugosité de surface des flancs de dents, comportant un bras d'exploration (12), qui est monté de façon à pouvoir pivoter sur un boîtier (10) et porte, au niveau d'une extrémité, une pointe d'exploration (16) servant à explorer la surface du flanc des dents, un système de mesure, qui produit des signaux correspondant aux déviations de la pointe d'exploration et envoie ces signaux à un circuit d'évaluation (20), et un dispositif (44; 440) qui agit sur le bras d'exploration et sert à régler la force d'appui de la pointe d'exploration, caractérisé en ce que le système de mesure comporte un capteur à effet Hall (30) et un générateur (D2) délivrant un champ magnétique statique, le capteur et le générateur étant disposés de manière à être déplaçables l'un par rapport à l'autre et étant fixés sur le boîtier (10) ou sur le bras d'exploration (12), et que le dispositif (44; 440) servant à régler la force d'application de la pointe d'exploration est disposé à distance du centre de rotation (M) du bras d'exploration (12).

2. Palpeur selon la revendication 1, caractérisé en ce que le générateur produisant un champ magnétique statique est constitué par au moins un aimant permanent (D2), qui est fixé sur le bras d'exploration (12) et dont la distance par rapport au capteur à effet Hall peut être réglée pour une position prédéterminée du bras d'exploration.

3. Palpeur selon la revendication 2, caractérisé en ce que le générateur produisant un champ magnétique statique comporte un aimant permanent supplémentaire (D1), qui est monté fixe sur le côté du capteur à effet Hall (30), tourné à l'opposé du bras d'exploration (12), dans le boîtier (10).

4. Palpeur selon la revendication 3, caractérisé en ce que l'aimant permanent supplémentaire est fixé directement sur le capteur à effet Hall (30).

5. Palpeur selon l'une des revendications 1 à 4, caractérisé en ce que le dispositif servant à régler la force d'application de la pointe d'exploration comporte deux aimants permanents (441, 442), dont l'un est relié au boîtier (10) et dont l'autre est relié au bras d'exploration (12) et dont l'écartement réciproque peut être réglé, pour une position prédéterminée du bras d'exploration.

6. Palpeur selon la revendication 5, caractérisé en ce que les deux aimants permanents (D1, D2) du générateur servant à produire un champ magnétique statique et les deux aimants permanents (441, 442) du dispositif servant à régler la force d'application de la pointe d'exploration sont disposés de telle sorte que des pôles respectifs de même nom sont réciproquement en vis-à-vis.

Fig.1

0 151 903

Fig. 2

0 151 903